# EUROPEAN PATENT SPECIFICATION

(11) **EP 2 426 875 B1**
(45) Date of publication and mention of the grant of the patent: **23.04.2014**
(21) Application number: 10174771.5
(22) Date of filing: 31.08.2010
(51) Int. Cl.: H04L 12/58

(54) **Communications system having instant message (im) contact based communications and related methods**
Kommunikationssystem mit Instantmessaging-Kontakt basierend auf Kommunikationen und zugehörige Verfahren
Système de communications doté de communications basées sur des contacts de messagerie instantanée et procédés apparentés

(43) Date of publication of application: 07.03.2012
(73) Proprietor: BlackBerry Limited, Waterloo, ON N2K 0A7 (CA)
(72) Inventor: Son, Giyeong, Waterloo Ontario N2L 5Z5 (CA); Yoon, Iljee, Mississauga Ontario L4W 0B5 (CA); Manolescu, Andreea, Mississauga Ontario L4W 0B5 (CA)
(74) Representative: Roberts, Gwilym Vaughan

(56) References cited:
- EP-A1- 2 096 808
- WO-A1-2004/003810
- WO-A1-2006/102448
- US-A1- 2004 176 080

## Description

### Technical Field

The present disclosure relates to the field of communications, and, more particularly, to messaging systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

As the functionality of a mobile wireless communications device continues to increase, so do mobile applications and additional mobile services for the mobile wireless communications device. A mobile application may incorporate additional features of the mobile wireless communications device. For example, a mobile application may provide a listing of nearby restaurants based upon a location of the mobile wireless communications device using a global positioning system (GPS) feature. Moreover, a mobile application may provide a song title based upon audio being input into the microphone of the mobile wireless communications device, for example.

A service provider, for example, a digital content provider, and a device provider may cooperate to develop a mobile application or additional services to increase revenues. Development of a new mobile application or additional service may involve development of a relatively complex framework, and thus may have a relatively increased development cost. Moreover, terms and conditions of use may be accompanied with a mobile application, for example, and add to the relative complexity and cost thereof.

US Publication No. 2004/176080 is directed to a method and apparatus for authorized distribution of digital content amongst a plurality of mobile devices, under the mobile service provider's control. A mobile subscriber requests for services (digital content/applications) to a mobile service provider. The mobile service provider then sends a download descriptor to the mobile device through an SMS message. The download descriptor includes a link to the actual digital content hosted by a content provider. The user is then able to read, delete, forward the download descriptor to other mobile users or download the content on his/her mobile device at any point of time. The user also gets notified about any changes such as a new service or a version upgrade according to his/her preferences. The invention enables the mobile service provider to implement payment, licensing, copyright and other digital rights management policies while enabling a user to distribute the content to other users.

EP Application No. 2096808 is directed to a system and method provided for enabling instant messages to be exchanged between mobile devices, in particular where a mobile device has access to information pertaining to another mobile device. The system enables an instant messaging application to communicate directly with the other mobile device, without requiring an initial email exchange. New contacts can be added automatically and access to other data such provided by having a mobile device access information for another mobile device. The information can be made available through a contact server of the host system common to both mobile devices thereby providing a trusted mechanism to establish the new contacts. In one example, in a PIN-to-PIN based messaging system, a global address list (GAL) lookup can be incorporated into an option for adding a new contact so that the PIN for the invitee is obtained directly and the invitation sent immediately in a PIN-to-PIN message thus not requiring an email invitation.

International Publication No. WO 2008/029219 is directed to an apparatus having a controller configured to store, in memory, a set of contact names, each contact name being associated with one or more account identifiers that identifies a communication protocol for communicating with the contact. The controller is further configured to establish a communication connection to a selected contact via a communication protocol associated with a selected account identifier.

Aspects and features of the present subject matter are set out in the appended claims.

### Brief Description of the Drawings

FIG. 1 is a schematic diagram of a communications system in accordance with an exemplary embodiment.
FIG. 2 is a more detailed schematic diagram of the communications system of FIG. 1.
FIG. 3 is a plan view of the subscriber device of FIG. 1.
FIG. 4 is a plan view of the content provider device of FIG. 1
FIG. 5 is a flow diagram of a method of communication in accordance with an exemplary aspect.
FIG. 6 is a schematic block diagram illustrating additional components that may be included in the subscriber device and the content provider device of FIG. 1 .

### Detailed Description of the Preferred Embodiments

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout.

A communications system may include a content provider device having an instant message (IM) content provider contact associated therewith and may be configured to store content. The communications system may include an IM contact server configured to register the content provider device and thereafter allow subscriber access to the IM content provider contact, for example. The communications system may further include a communications server configured to communicate with the content provider device, and a subscriber device configured to access the IM content provider contact from the IM contact server, and download content from the content provider device via the communications server an based upon the IM content provider contact. Accordingly, new content and services may be more easily located and more quickly delivered.

The IM contact server may be configured to send a notification to the content provider device based upon the subscriber device accessing the IM content provider contact. The content provider device may also be configured to validate the subscriber device to permit downloading of content, for example.

The content provider device may further be configured to store updated content. The IM contact server may be configured to send a notification to the subscriber device relating to the updated content, for example.

The communications system may further include a new content provider device having a new IM content provider contact associated therewith and configured to store new content. The IM contact server may be configured to register the new content provider device and thereafter allow subscriber access to the new IM content provider contact. The IM contact server may be configured to send a notification to the subscriber device relating to the new IM content provider contact and new content, for example.

The subscriber device may include a wireless transceiver and a controller cooperating therewith to perform at least one wireless communications function. The content provider device may include a mobile wireless content provider device, for example. The communications server may include an IM communications server.

A method may include using a using a content provider device having an instant message (IM) content provider contact associated therewith to store content. The method may also include using an IM contact server to register the content provider device and thereafter allow subscriber access to the IM content provider contact, and using a communications server to communicate with the content provider device, for example. The method may further include using a subscriber device to access the IM content provider contact from the IM contact server, and download content from the content provider device via the communications server and based upon the IM content provider contact.

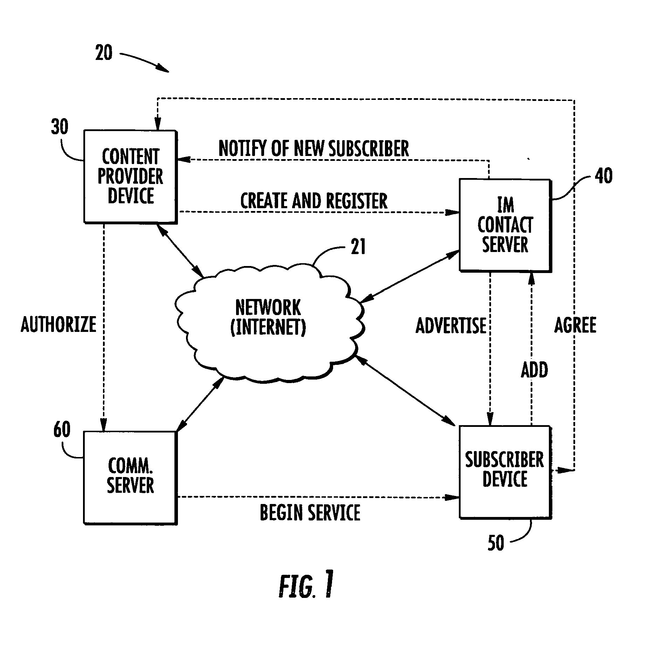

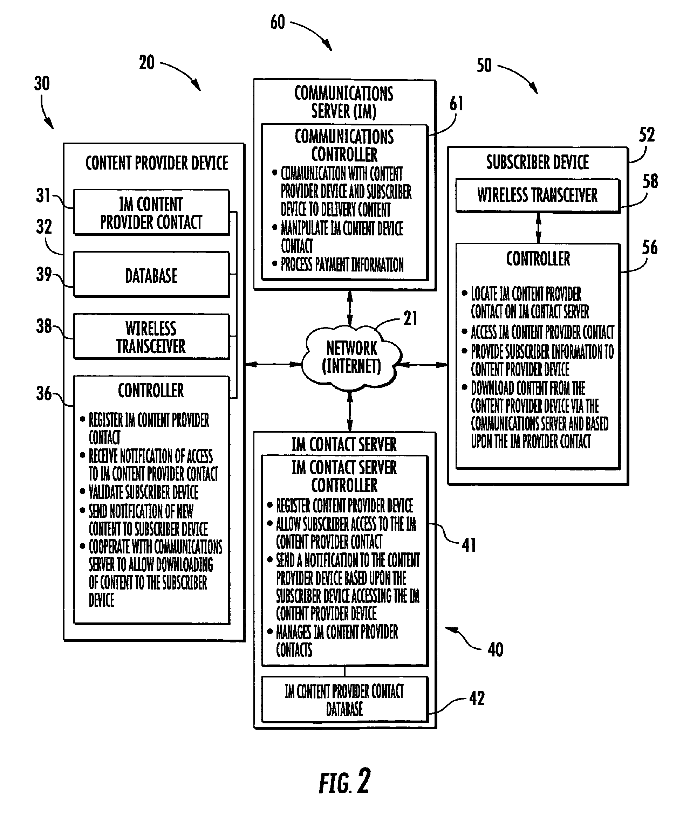

Referring initially to FIGS. 1-4, the communications system **20** illustratively includes a content provider device **30** having an instant message (IM) content provider contact **31** associated therewith. The content provider device **30** is configured to store content, for example digital content. For example, digital content may include an electronic book (e-book), movie, song, or other digital content, as will be appreciated by those skilled in the art. The content provider device **30** is illustratively a mobile wireless content provider device, and more particularly, a cellular telephone.
The content provider device **30** includes a housing **32,** a display **33** carried by the housing, and an audio transducer **35** also carried by the housing. The audio transducer **35** may be a microphone, for example. The audio transducer **35** may also be a speaker. In some example embodiments, there may be more than one audio transducer **35,** for example, a microphone and speaker may be used and carried by the housing **32.**

The content provider device **30** includes one or more input devices **37.** The input devices **37** illustratively include push buttons for cooperating with a content provider device controller **36.** In some example embodiments, the input device **37** may be an alphanumeric keypad or other input device for cooperating with the content provider device controller **36,** for example. Still further, an input device **37** may be coupled to the display **33** to accept a touching input therefrom and cooperate with the content provider device controller **36.**

The content provider device controller **36** is also carried by the housing **32** and cooperates with the wireless transceiver **38** to perform at least one mobile wireless communications function. For example, the wireless transceiver **38** may be a cellular transceiver or a WiFi transceiver, for example, and may cooperate with the controller **36** to communicate data and/or voice communications. Other types of wireless transceivers and mobile wireless communications functions will be appreciated by those skilled in the art. The content provider device **30** may be another type of device, for example, a personal digital assistant (PDA), or a desktop computer or server.

A content provider, for example, may advertise and sell digital content via the content provider device 30. The IM content provider contact **31** advantageously provides a service or communication context between the content provider device **30** and a subscriber device **50,** which is illustratively a mobile wireless communications device.

The subscriber device **50** includes a housing, **52,** a display **23** carried by the housing, and an audio transducer **55** also carried by the housing. The audio transducer **55** may be a microphone, for example. The audio transducer **55** may also be a speaker. In some example embodiments, there may be more than one audio transducer **55,** for example, a microphone and speaker may be used and carried by the housing **52.**

The subscriber device **50** includes one or more input devices **57.** The input devices **57** illustratively include push buttons for cooperating with a subscriber device controller **56.** In some example embodiments, the input device **57** may be an alphanumeric keypad or other input device for cooperating with the subscriber device controller **56,** for example. Still further, an input device **57** may be coupled to the display **53** to accept a touching input therefrom and cooperate with the subscriber device controller **56.**

The subscriber device controller **56** is also carried by the housing **52** and cooperates with the wireless transceiver **58** to perform at least one mobile wireless communications function. For example, the wireless transceiver **58** may be a cellular transceiver or a WiFi transceiver, for example, and may cooperate with the controller **56** to communicate data and/or voice communications. Other types of wireless transceivers and mobile wireless communications functions will be appreciated by those skilled in the art. The subscriber device **50** may be another type of device, for example, a personal digital assistant (PDA), or a desktop computer or server.

The subscriber device **50** can find and subscribe to services or content by adding a registered IM content provider contact **31** to a subscriber device contact list. The subscriber device **50** may include a subscriber device client application for providing a user interface. A client application may be an IM client application, for example, an IM client application provided by MSN^{™}, Yahoo^{™}, and AOL^{™}.

There are several types of IM content provider contacts **31** associated with a content service or the content provider device **30.** For example, an IM content provider contact **31** may be a public contact corresponding to the digital content provider, or the content provider device **30.** In this example, the content provider device **30** is represented by the IM content provider contact **31** so any transactions between the content provider device **30** and a subscriber device **50** are performed via the IM content provider device **31.**

An IM content provider contact **31** may also correspond to the content itself. In other words, the content itself is represented by the IM content provider contact **31.** Thus, a transaction of content, for example, an order and confirmation, between the content provider device **30** and the subscriber device **50** may be performed by using the IM content provider contact **31.** The IM content provider contact **31** may be especially advantageous for advertising and delivery of content to a subscriber. Additionally, a subscriber or mobile wireless communications device user may advertise and communicate with other people, for example.

The IM content provider contact **31** may have additional information associated with it. For example, the IM content provider contact **31** may have an associated IM content provider contact identifier (ID). The IM content provider contact **31** may also include a contact name associated therewith. For example, the contact name may include a person's name or other identifying name to identify the type of content, for example.

The IM content provider contact **31** may also have a contact type associated with it. For example, a contact type may include a user, for example, an owner of a subscriber device **50,** a service, a system, digital content (for example, an e-book, song, movie, etc.), or a service provider or content provider device **30.** The IM content provider contact **31** may also have a service or communication method and related information associated with it. For example, the communication method information may relate to how the subscriber device **50** receives the content or service, or how the subscriber device and the content provider device **30** communicate with each other.

For example, if the contact type is a notification service, the service method may be set to IM or short messaging service (SMS). If the contact type is digital content, for example (a picture, song, or e-book), the service method may be set to a hypertext transport protocol (HTTP), which includes required HTTP information, for example a uniform resource locator (URL) to the digital content. In other words, as will be appreciated by those skilled in the art, the content may be delivered via another protocol which may not be an IM protocol.

The IM content provider contact **31** may also have a description associated with it. The description may provide a relatively short description about the IM content provider contact **31.** For example, if the contact type is set to a notification service, the description may include a relatively short description about the notification service, for example, so the subscriber device **50** may know the service represented by the IM content provider contact **31.** If the contact type is a digital content provider, for example, the description may include information about the content provider device **30,** content provider itself, and available content.

The IM content provider contact **31** may also include a review attribute associated with it. For example, a user of a subscriber device **50** may provide comments or review the content provided by the content provider device **30.** In other words, subscriber feedback may be made via the IM content provider contact **31.**

The content provider device **30** also includes a subscriber database **39.** The subscriber database **32** may include subscribers or subscriber device IDs having a history of non-payment (i.e. a blacklist). The subscriber database **32** may include other types of data and be for other purposes, for example.

The communications system **20** may include an IM contact server **40** configured to register the content provider device **30** and thereafter allow subscriber access to the IM content provider contact **31.** The IM contact server **40** including an IM contact server controller **41** manages the IM content provider contacts **31** and provides communications operations between the content provider device **30** and the subscriber device **50.** The IM contact server **40** manages the IM content provider contacts **31** service or content delivery and subscription. For example, the unique ID associated with the IM content provider contact **31** may be created and managed by the IM contact server **40.** The IM contact server **40,** as a manager of the IM content provider contacts **31** may be a scalable, have increased reliability, and have improved security. The IM contact server **40** may also include a database **42** for storing the IM content provider contacts **31** and corresponding information.

The communications system **20** may further include a communications server **60** including a communications device controller **61** configured to communicate with the content provider device **30.** The communications server **60** advantageously delivers the content or service from the content provider device **30** to the subscriber device **50.** The communications server **60** may also be for IM content provider contact **31** manipulation. For example, the content provider device **30** and the subscriber **50** may communicate, via the communications sever **60,** with the IM contact server **40** to manipulate the IM content provider contact **31,** for example. For example, such manipulation may include creation of an IM content provider contact **31,** registration of an IM content provider contact, notification of a new IM content provider contact, and addition of an IM content provider contact (i.e. acceptance of customers). The communications server **60** may also process payment information, for example, credit card information, and other membership information.

The communication server **60** also provides IM communications to the subscriber device **50.** The IM communications may be pushed from the content provider device **30** to subscribed subscriber devices, for example, to advertise new content. Communications via the communications server **60** may be secure, as will be appreciated by those skilled in the art.

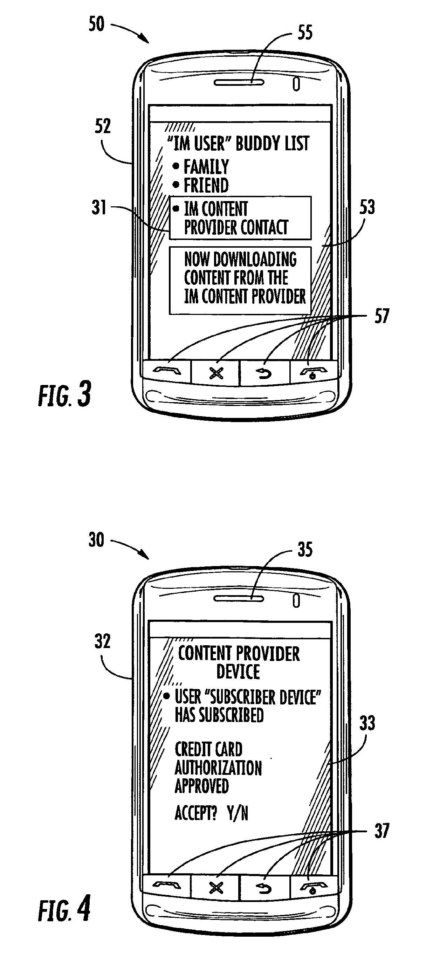

The subscriber device **50** is configured to access the IM content provider contact **31** from the IM contact server **40.** The subscriber device **50** advantageously is configured to download content from the content provider device **30** via the communications server **60** and based upon the IM content provider contact **31** (FIG. 3). The content may also be downloaded from a proxy or third party device (not shown) acting on behalf of the content provider device **30.** The content provider device **30** may validate the subscriber device **50** prior to downloading of the content, for example, verifying an email address or authorizing a credit card for payment (FIG. 4).

The communications system **20,** including the subscriber device **50,** the content provider device **30,** the communications server **60,** and the IM contact server **40** may communicate over a network **21.** The network **21** may be the Internet for example. The network may also include a combination of different types of networks, for example, a cellular network, and a wireless local area network (WLAN). The network **21** may include other types of networks, as will be appreciated by those skilled in the art.

A subscriber using the subscriber device **50** may find a content provider device **30** and become a member by registering or adding the corresponding IM content provider contact **31.** The subscriber may also purchase content by adding the IM content provider contact **31** of the new content that corresponds to the content provider device **30** or content provider.

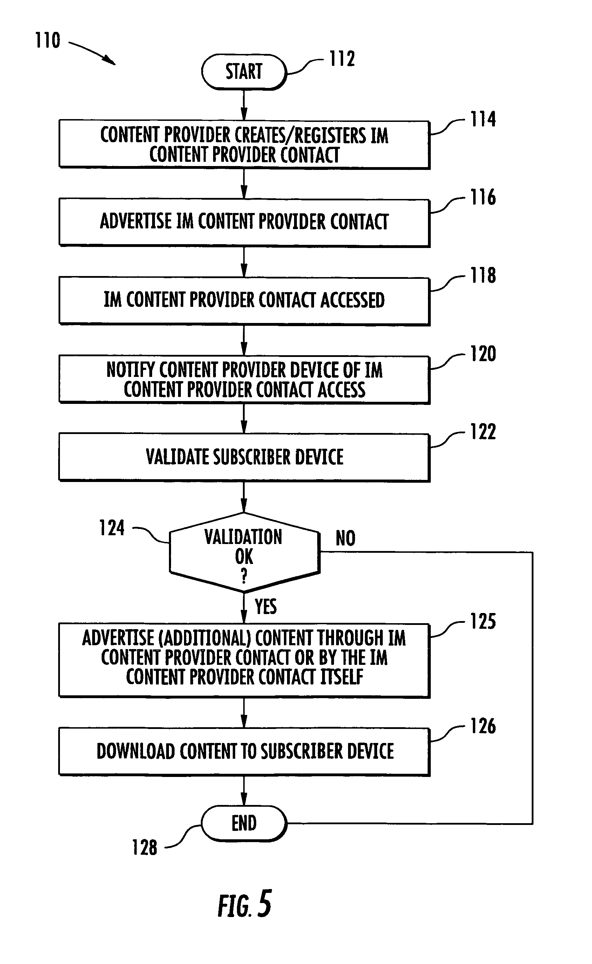

Referring now to the flowchart **110** in FIG. 5, beginning at Block **112,** operation of the communications system with regard to the content provider device **30** is described. At Block **114,** the content provider device **30** creates and registers an IM content provider contact **31** to deliver content or a service. In some embodiments, the content provider device **30** creates and registers an IM content provider contact **31** that is representative of the content or service. For example, the IM content provider contact **31** may represent a particular song.

If the content provider device **30** is a mobile wireless communications device, for example, the IM content provider contact **31** may be registered to the IM contact server **40** via a content provider client application in the content provider device. If the content provider device **30** is not a mobile wireless communications device, for example, the IM content provider contact **31** may be created and registered through an interface provided by IM contact server **40.** The interface may be web-based interface, for example, or other type of interface, as will be appreciated by those skilled in the art.

Once an IM content provider contact **31** is created and registered by the content provider device **30,** the IM content provider contact may be advertised (Block **116**). For example, the IM content provider contact **31,** or content represented by the IM content provide contact, may be advertised by a notification. More particularly, a subscriber device **50** may set or permit advertisement of new IM content provider contacts, or data represented by the IM content provider contacts, based upon certain criteria through notifications. Any new IM content provider contacts satisfying the criteria may be advertised to the users through notifications.

Additionally, the subscriber device **50** may be notified from the IM contact server **40** of content updates that may have been provided by the content provider device **30.** The subscriber device **50** may also be notified from the IM contact server **40** of a new IM content provider contact **31** that represents new content. A subscriber device **50** may also browse the IM contact server **40** to find existing and new IM content provider contacts **31.** The IM contact server **40** and the client application of the subscriber device **50** may provide improved quality of user experience (QoE), as will be appreciated by those skilled in the art.

At Block **118,** when a user of a subscriber device **50** finds an IM content provider contact **31** of interest, the user adds the IM content provider contact in a contact list in the subscriber device **50.** Once the IM content provider contact **31** is added to the contact list of the subscriber device **50,** the content provider device **30** is notified of a new service subscriber, or of the subscriber device **50** accessing the IM content provider contact (Block **120**).

Thereafter, the content provider device **30** performs procedures for beginning the service or providing content to the subscriber device **50** (Block **122**). For example, a service charging contract or agreement may be negotiated between the content provider device **30** (content provider) and the subscriber device **50** (subscriber). In another example, if the IM content provider contact **31** is an online book seller, for example, a user account corresponding to the user or subscriber device **50** may be could be created before ordering any books from the book seller.

If, however, the subscriber is already an authorized subscriber, or member, the content may be downloaded to the subscriber device **50,** as a payment agreement is already established. For example, if the subscriber is already authorized, information, such as payment method, delivery address, etc. are already known. After the subscriber have been validated (Block **124**), the subscriber device **50** may download the ordered content according to the service method specified in the IM content provider contact **31.**

After successful validation at Block **124,** at Block **125,** content, which may be additional content, may be advertised through the IM content provider contact **31.** Alternatively, or additionally, in the case where the content is represented by the IM content provider contact **31,** the content may be advertised by the IM content provider contact itself. At Block **126,** once the content provider device **30** accepts and authorizes subscription request from the subscriber device **50,** the subscriber may begin receive the service or content before ending at Block **128.**

As will be appreciated by those skilled in the art, the communications system **20** advantageously provides an increased reliability, security, and efficiency communications framework. The communications system **20** advantageously enables the content providers, via the content provider device **30,** and subscribers, via the subscriber device **50,** to publish and subscribe to content services with increased ease, reliability, and security.

From a business perspective, the communications system **20** advantageously enables various types of relatively valuable business models. For example, the communications system **20** may allow a relatively large number of subscriber devices **50** to subscribe or connect to a content provider device via the IM contact server **40.** In one particular example, a relatively large amount of IM users may subscribe for content or subscribe to the service. Content providers may advertise services, information, and products, and may charge their subscribers for the service.

The service fee may be based on a subscription, the number of messages, or the number of service transactions, for example, or if the service is a mobile push service, such as stock trading information, online training, or other information, the service provider may charge a fee per subscription. If the service provider is a content provider or online merchandise seller, such as online book seller, charges may apply based upon a per service transaction when the subscriber downloads the respective content.

An owner or operator of the IM contact server **40** may charge a content provider based on the number of registered IM content provider contacts or devices, the number of messages, or service transactions, for example. The mobile device users may also be enabled to be a content provider and may also charge fees.

The communications system **20** may provide increased business opportunities and a unified service delivery framework. Moreover, a subscriber may expand corresponding subscriber device usage by subscribing to various multiple services. The communications system **20** may be especially beneficial in a push-type infrastructure, for example, as its infrastructure is robust and enables relatively easy and quick deployment compared to other infrastructures. Accordingly, a relatively large number of users, for example, may produce increased revenue from the service. Additionally, the communications system **20** may also improve sales of subscriber devices **50,** for example mobile wireless communications devices.

The communications system **20** may be configured within a mobile push service, for example. Notification based services may be provided by corporate or non-profit organization or people, for example, news, weather, stock trading information or other valuable information. This service may be similar to Twitter^{™}, for example, but may be based on an IM content provider contact. It may also provide increased reliability, efficiency, and security in notification subscription and delivery compared to Twitter^{™}, for example, especially if the communications system **20** is integrated within a robust service infrastructure.

The communications system **20** may also particularly advantageous for digital content business, for example, an eBook, song, movie, etc., for a subscriber device **50.** The communications system 20 may provide a digital content business that may be similar to the iTunes^{™} service, for example.

The communications system **20** may also be particularly advantageous in a mobile application store. Nowadays, many mobile device vendors operate a mobile application store. Some vendors may also operate some types of digital content business.

However, there may not be any parties who enable other anonymous service providers to sell their services similar to an application store. The communications system **20** advantageously enables a mobile application store, digital content business, or other business to be operated by the IM contact server operator, for example. This business model may have increased value to not only the service providers, but also the IM contact server operator.

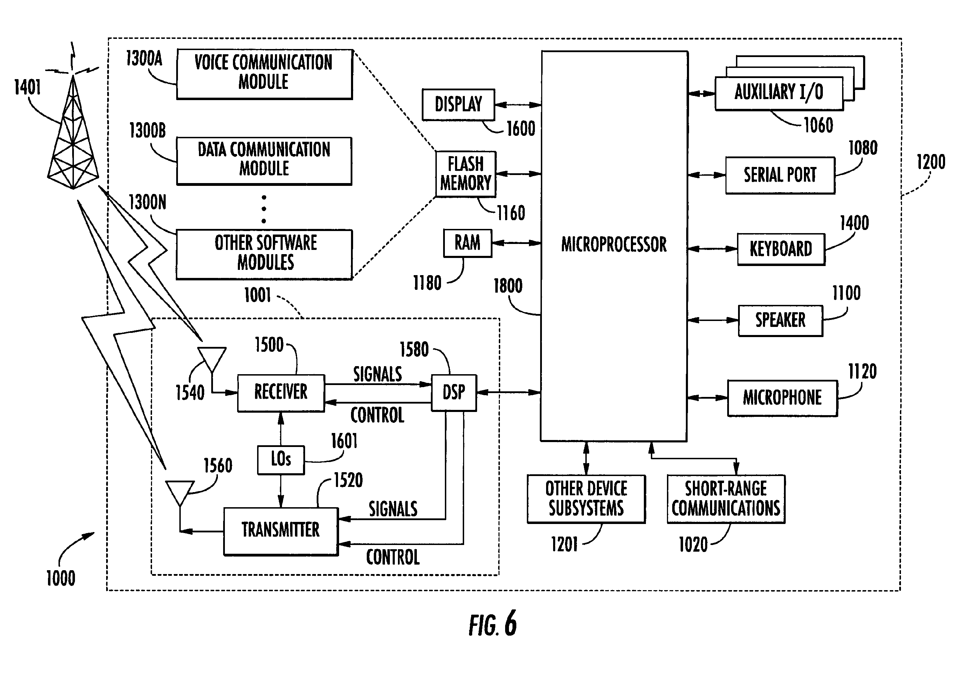

Exemplary components that may be used in various embodiments of the above-described content provider and subscriber devices are now described with reference to an exemplary mobile wireless communications device **1000** shown in FIG. 6. The device **1000** illustratively includes a housing **1200,** a keypad **1400** and an output device **1600.** The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures, for example). The keypad **1400** may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications or modules **1300A-1300N** on the device **1000,** such as software modules for performing various steps or operations. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device 1000 may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth^{™} communications module to provide for communication with similarly-enabled systems and devices.

Many modifications and other example embodiments of the present disclose will come to the mind of one skilled in the art having the benefit of the teachings presented in the foregoing descriptions and the associated drawings. Therefore, it is understood that the present disclosure is not to be limited to the specific example embodiments disclosed, and that modifications and example embodiments are intended to be included within the scope of the appended claims.

## Claims

1. A communications system (20) comprising:
a content provider device (30) having an instant message (IM) content provider contact (31) associated therewith and configured to store content, the IM content provider contact having a contact type associated therewith;
an IM contact server (40) configured to register said content provider device (30) and thereafter allow subscriber access to the IM content provider contact (31);
a communications server (60) configured to communicate with said content provider device(30); and
a subscriber device (50) configured to send and receive instant messages and access the IM content provider contact (31) from said IM contact server (40), and download content from said content provider device (30) via said communications server (60) and based upon the IM content provider contact (31), the subscriber device being configured to download the content via a given delivery protocol based upon the contact type.

2. The communications system (20) according to Claim 1, wherein said IM contact server (40) is configured to send a notification to said content provider device (30) based upon said subscriber device (50) accessing the IM content provider contact.

3. The communications system (20) according to Claim 1, wherein said content provider device (30) is configured to validate said subscriber device (50) to permit downloading of content.

4. The communications system (20) according to Claim 1, wherein said content provider device (30) is further configured to store updated content; and wherein said IM contact server (40) is configured to send a notification to said subscriber device (50) relating to the updated content.

5. The communications system (20) according to Claim 1, further comprising a new content provider device (30) having a new IM content provider contact (31) associated therewith and configured to store new content; wherein said IM contact server (40) is configured to register said new content provider device (30) and thereafter allow subscriber access to the new IM content provider contact (31); and wherein said IM contact server (60) is configured to send a notification to said subscriber device (50) relating to the new IM content provider contact (31) and new content.

6. The communications system (20) according to Claim 1, wherein said subscriber device (50) comprises a wireless transceiver (58) and a controller cooperating therewith to perform at least one wireless communications function.

7. The communications system (20) according to Claim 1, wherein said content provider device (30) comprises a mobile wireless content provider device (30).

8. The communications system (20) according to Claim 1, wherein said communications server comprises an IM communications server (60).

9. A communications method comprising:
using a content provider device (30) having an instant message (IM) content provider contact (31) associated therewith to store content, the IM content provider contact having a contact type associated therewith;
using an IM contact server (40) to register the content provider device (30)and thereafter allow subscriber access to the IM content provider contact (40);
using a communications server to communicate with the content provider device (30); and
using a subscriber device (50) to access the IM content provider contact (31) from the IM contact server (40), and download content from the content provider device (30) via the communications server and based upon the IM content provider contact (31), the subscriber device being configured to download the content via a given delivery protocol based upon the contact type, wherein the subscriber device (50) is configured to send and receive instant messages.

10. The method according to Claim 9, wherein using the IM contact server (40) comprises using the IM contact server (40) to send a notification to the content provider device (30) based upon the subscriber device (50) accessing the IM content provider contact (31).

11. The method according to Claim 9, wherein using the content provider device (30) comprises using the content provider device (30) to validate the subscriber device (50) to permit downloading of content.

12. The method according to Claim 15, wherein using the content provider device (30) comprises using the content provider device (30) to store updated content; and wherein using the IM contact server (40) comprises using the IM contact server (40) to send a notification to the subscriber device (50) relating to the updated content.

13. The method according to Claim 9, further comprising using a new content provider device (30) having a new IM content provider contact (31) associated therewith to store new content; wherein using the IM contact server (40) comprises using the IM contact server (40) to register the new content provider device (30) and thereafter allow subscriber access to the new IM content provider contact (31); and wherein using the IM contact server (40) comprises using the IM contact server (40) to send a notification to the subscriber device (50) relating to the new IM content provider contact (31) and new content.

14. The method according to Claim 9, wherein using the content provider device (30) comprises using a mobile wireless content provider device (30).

15. The method according to Claim 9, wherein using the communications server comprises using an IM communications server (60).

## Patentansprüche

1. Ein Kommunikationssystem (20), das aufweist:
eine Inhaltsanbietervorrichtung (30), die einen damit assoziierten Sofortnachricht(IM - instant message)-Inhaltsanbieter-Kontakt (31) hat und konfiguriert ist zum Speichern von Inhalt, wobei der IM-InhaltsanbieterKontakt einen damit assoziierten Kontakttyp hat;
einen IM-Kontakt-Server (40), der konfiguriert ist zum Registrieren der Inhaltsanbietervorrichtung (30) und danach Zulassen eines Teilnehmerzugriffs auf den IM-Inhaltsanbieter-Kontakt (31);
einen Kommunikationsserver (60), der konfiguriert ist zum Kommunizieren mit der Inhaltsanbietervorrichtung (30); und
eine Teilnehmervorrichtung (50), die konfiguriert ist zum Senden und Empfangen von Sofortnachrichten und Zugreifen auf den IM-Inhaltsanbieter-Kontakt (31) von dem IM-Kontakt-Server (40), und
Herunterladen von Inhalt von der Inhaltsanbietervorrichtung (30) über den Kommunikationsserver (60), und basierend auf dem IM-Inhaltsanbieter-Kontakt (31) die Teilnehmervorrichtung konfiguriert ist zum Herunterladen des Inhalts über ein gegebenes Lieferprotokoll basierend auf dem Kontakttyp.

2. Das Kommunikationssystem (20) gemäß Anspruch 1, wobei der IM-Kontakt-Server (40) konfiguriert ist zum Senden einer Benachrichtigung an die Inhaltsanbietervorrichtung (30) basierend darauf, dass die Teilnehmervorrichtung (50) auf den IM-Inhaltsanbieter-Kontakt zugreift.

3. Das Kommunikationssystem (20) gemäß Anspruch 1, wobei die Inhaltsanbietervorrichtung (30) konfiguriert ist zum Validieren der Teilnehmervorrichtung (50) zum Zulassen eines Herunterladens von Inhalt.

4. Das Kommunikationssystem (20) gemäß Anspruch 1, wobei die Inhaltsanbietervorrichtung (30) weiter konfiguriert ist zum Speichern von aktualisiertem Inhalt; und wobei der IM-Kontakt-Server (40) konfiguriert ist zum Senden einer Benachrichtigung an die Teilnehmervorrichtung (50) in Bezug auf den aktualisierten Inhalt.

5. Das Kommunikationssystem (20) gemäß Anspruch 1, das weiter aufweist eine neue Inhaltsanbietervorrichtung (30), die einen damit assoziierten neuen IM-Inhaltsanbieter-Kontakt (31) hat und konfiguriert ist zum Speichern von neuem Inhalt; wobei der IM-Kontakt-Server (40) konfiguriert ist zum Registrieren der neuen Inhaltsanbietervorrichtung (30) und danach Zulassen eines Teilnehmerzugriffs auf den neuen IM-Inhaltsanbieter-Kontakt (31); und wobei der IM-Kontakt-Server (60) konfiguriert ist zum Senden einer Benachrichtigung an die Teilnehmervorrichtung (50) in Bezug auf den neuen IM-Inhaltsanbieter-Kontakt (31) und neuen Inhalt.

6. Das Kommunikationssystem (20) gemäß Anspruch 1, wobei die Teilnehmervorrichtung (50) einen drahtlosen Transceiver (58) und eine damit zusammenarbeitende Steuervorrichtung aufweist, um zumindest eine drahtlose Kommunikationsfunktion durchzuführen.

7. Das Kommunikationssystem (20) gemäß Anspruch 1, wobei die Inhaltsanbietervorrichtung (30) eine mobile drahtlose Inhaltsanbietervorrichtung (30) aufweist.

8. Das Kommunikationssystem (20) gemäß Anspruch 1, wobei der Kommunikationsserver einen IM-Kommunikationsserver (60) aufweist.

9. Ein Kommunikationsverfahren, das aufweist:
Verwenden einer Inhaltsanbietervorrichtung (30), die einen damit assoziierten Sofortnachricht(IM - instant message)-Inhaltsanbieter-Kontakt (31) hat, zum Speichern von Inhalt, wobei der IM-Inhaltsanbieter-Kontakt einen damit assoziierten Kontakttyp hat;
Verwenden eines IM-Kontakt-Servers (40) zum Registrieren der Inhaltsanbietervorrichtung (30) und danach Zulassen eines Teilnehmerzugriffs auf den IM-Inhaltsanbieter-Kontakt (40);
Verwenden eines Kommunikationsservers zum Kommunizieren mit der Inhaltsanbietervorrichtung (30); und
Verwenden einer Teilnehmervorrichtung (50) zum Zugreifen auf den IM-Inhaltsanbieter-Kontakt (31) von dem IM-Kontakt-Server (40), und Herunterladen von Inhalt von der Inhaltsanbietervorrichtung (30) über den Kommunikationsserver, und basierend auf dem IM-Inhaltsanbieter-Kontakt (31) die Teilnehmervorrichtung konfiguriert ist zum Herunterladen des Inhalts über ein gegebenes Lieferprotokoll basierend auf dem Kontakttyp, wobei die Teilnehmervorrichtung (50) konfiguriert ist zum Senden und Empfangen von Sofortnachrichten.

10. Das Verfahren gemäß Anspruch 9, wobei das Verwenden des IM-Kontakt-Servers (40) aufweist ein Verwenden des IM-Kontakt-Servers (40) zum Senden einer Benachrichtigung an die Inhaltsanbietervorrichtung (30) basierend darauf, dass die Teilnehmervorrichtung (50) auf den IM-Inhaltsanbieter-Kontakt (31) zugreift.

11. Das Verfahren gemäß Anspruch 9, wobei das Verwenden der Inhaltsanbietervorrichtung (30) aufweist ein Verwenden der Inhaltsanbietervorrichtung (30) zum Validieren der Teilnehmervorrichtung (50) zum Zulassen eines Herunterladens von Inhalt.

12. Das Verfahren gemäß Anspruch 15, wobei das Verwenden der Inhaltsanbietervorrichtung (30) aufweist ein Verwenden der Inhaltsanbietervorrichtung (30) zum Speichern von aktualisiertem Inhalt; und wobei das Verwenden des IM-Kontakt-Servers (40) aufweist ein Verwenden des IM-Kontakt-Servers (40) zum Senden einer Benachrichtigung an die Teilnehmervorrichtung (50) in Bezug auf den aktualisierten Inhalt.

13. Das Verfahren gemäß Anspruch 9, das weiter aufweist ein Verwenden einer neuen Inhaltsanbietervorrichtung (30), die einen damit assoziierten neuen IM-Inhaltsanbieter-Kontakt (31) hat, zum Speichern von neuem Inhalt; wobei das Verwenden des IM-Kontakt-Servers (40) aufweist ein Verwenden des IM-Kontakt-Servers (40) zum Registrieren der neuen Inhaltsanbietervorrichtung (30) und danach Zulassen eines Teilnehmerzugriffs auf den neuen IM-Inhaltsanbieter-Kontakt (31); und wobei das Verwenden des IM-Kontakt-Servers (40) aufweist ein Verwenden des IM-Kontakt-Servers (40) zum Senden einer Benachrichtigung an die Teilnehmervorrichtung (50) in Bezug auf den neuen IM-Inhaltsanbieter-Kontakt (31) und neuen Inhalt.

14. Das Verfahren gemäß Anspruch 9, wobei das Verwenden der Inhaltsanbietervorrichtung (30) ein Verwenden einer mobilen drahtlosen Inhaltsanbietervorrichtung (30) aufweist.

15. Das Verfahren gemäß Anspruch 9, wobei das Verwenden des Kommunikationsservers ein Verwenden eines IM-Kommunikationsservers (60) aufweist.

## Revendications

1. Système de communication (20) comprenant :
un dispositif de fournisseur de contenu (30) ayant un contact de fournisseur de contenu (31) de message instantané (MI) qui lui est associé et configuré pour stocker un contenu, le contact de fournisseur de contenu de MI ayant un type de contact qui lui est associé ;
un serveur de contact de MI (40) configuré pour enregistrer ledit dispositif de fournisseur de contenu (30) et permettre par la suite à l'abonné d'accéder au contact de fournisseur de contenu de MI (31) ;
un serveur de communication (60) configuré pour communiquer avec ledit dispositif de fournisseur de contenu (30) ; et
un dispositif d'abonné (50) configuré pour envoyer et recevoir des messages instantanés et accéder au contact de fournisseur de contenu de MI (31) à partir dudit serveur de contact de MI (40), et télécharger le contenu à partir dudit dispositif de fournisseur de contenu (30) via ledit serveur de communication (60) et sur la base du contact de fournisseur de contenu de MI (31), le dispositif d'abonné étant configuré pour télécharger le contenu via un protocole de distribution donné sur la base du type de contact.

2. Système de communication (20) selon la revendication 1, dans lequel ledit serveur de contact de MI (40) est configuré pour envoyer une notification audit dispositif de fournisseur de contenu (30) sur la base dudit dispositif d'abonné (50) accédant au contact de fournisseur de contenu de MI.

3. Système de communication (20) selon la revendication 1, dans lequel ledit dispositif de fournisseur de contenu (30) est configuré pour valider ledit dispositif d'abonné (50) afin de permettre le téléchargement du contenu.

4. Système de communication (20) selon la revendication 1, dans lequel ledit dispositif de fournisseur de contenu (30) est en outre configuré pour stocker le contenu mis à jour ; et dans lequel ledit serveur de contact de MI (40) est configuré pour envoyer une notification audit dispositif d'abonné (50) relative au contenu mis à jour.

5. Système de communication (20) selon la revendication 1, comprenant en outre un nouveau dispositif de fournisseur de contenu (30) ayant un nouveau contact de fournisseur de contenu de MI (31) qui lui est associé et configuré pour stocker un nouveau contenu ; où ledit serveur de contact de MI (40) est configuré pour enregistrer ledit nouveau dispositif de fournisseur de contenu (30) et permettre par la suite à l'abonné d'accéder au nouveau contact de fournisseur de contenu de MI (31) ; et où ledit serveur de contact de MI (60) est configuré pour envoyer une notification audit dispositif d'abonné (50) relative au nouveau contact de fournisseur de contenu de MI (31) et au nouveau contenu.

6. Système de communication (20) selon la revendication 1, dans lequel ledit dispositif d'abonné (50) comprend un émetteur-récepteur sans fil (58) et une unité de commande coopérant avec celui-ci pour exécuter au moins une fonction de communication sans fil.

7. Système de communication (20) selon la revendication 1, dans lequel ledit dispositif de fournisseur de contenu (30) comprend un dispositif de fournisseur de contenu sans fil mobile (30).

8. Système de communication (20) selon la revendication 1, dans lequel ledit serveur de communication comprend un serveur de communications de MI (60).

9. Procédé de communication, comprenant :
l'utilisation d'un dispositif de fournisseur de contenu (30) ayant un contact de fournisseur de contenu (31) de message instantané (MI) qui lui est associé pour stocker un contenu, le contact de fournisseur de contenu de MI ayant un type de contact qui lui est associé ;
l'utilisation d'un serveur de contact de MI (40) pour enregistrer le dispositif de fournisseur de contenu (30) et permettre par la suite à l'abonné d'accéder au contact de fournisseur de contenu de MI (40) ;
l'utilisation d'un serveur de communication pour communiquer avec le dispositif de fournisseur de contenu (30) ; et
l'utilisation d'un dispositif d'abonné (50) pour accéder au contact de fournisseur de contenu de MI (31) à partir du serveur de contact de MI (40), et télécharger le contenu à partir du dispositif de fournisseur de contenu (30) via le serveur de communication et sur la base du contact de fournisseur de contenu de MI (31), le dispositif d'abonné étant configuré pour télécharger le contenu via un protocole de distribution donné sur la base du type de contact, où le dispositif d'abonné (50) est configuré pour envoyer et recevoir des messages instantanés.

10. Procédé selon la revendication 9, dans lequel l'utilisation du serveur de contact de MI (40) comprend l'utilisation du serveur de contact de MI (40) pour envoyer une notification au dispositif de fournisseur de contenu (30) sur la base du dispositif d'abonné (50) accédant au contact de fournisseur de contenu de MI (31).

11. Procédé selon la revendication 9, dans lequel l'utilisation du dispositif du fournisseur de contenu (30) comprend l'utilisation du dispositif de fournisseur de contenu (30) pour valider le dispositif d'abonné (50) afin de permettre le téléchargement du contenu.

12. Procédé selon la revendication 15, dans lequel l'utilisation du dispositif de fournisseur de contenu (30) comprend l'utilisation du dispositif de fournisseur de contenu (30) pour stocker un contenu mis à jour ; et dans lequel l'utilisation du serveur de contact de MI (40) comprend l'utilisation du serveur de contact de MI (40) pour envoyer une notification au dispositif d'abonné (50) relative au contenu mis à jour.

13. Procédé selon la revendication 9, comprenant en outre l'utilisation d'un nouveau dispositif de fournisseur de contenu (30) ayant un nouveau contact de fournisseur de contenu de MI (31) qui lui est associé pour stocker un nouveau contenu ; où l'utilisation du serveur de contact de MI (40) comprend l'utilisation du serveur de contact de MI (40) pour enregistrer le nouveau dispositif de fournisseur de contenu (30) et permettre par la suite à l'abonné d'accéder au nouveau contact de fournisseur de contenu de MI (31) ; et où l'utilisation du serveur de contact de MI (40) comprend l'utilisation du serveur de contact de MI (40) pour envoyer une notification au dispositif d'abonné (50) relative au nouveau contact de fournisseur de contenu de MI (31) et au nouveau contenu.

14. Procédé selon la revendication 9, dans lequel l'utilisation du dispositif de fournisseur de contenu (30) comprend l'utilisation d'un dispositif de fournisseur de contenu sans fil mobile (30).

15. Procédé selon la revendication 9, dans lequel l'utilisation du serveur de communication comprend l'utilisation d'un serveur de communications de MI (60).
